# EUROPEAN PATENT APPLICATION

(11) **EP 4 672 201 A1**
(43) Date of publication of application: **31.12.2025**
(21) Application number: 25183935.3
(22) Date of filing: 19.06.2025
(51) Int. Cl.: G08G 5/26, H04L 67/12

(54) **SYSTEMS, APPARATUSES, METHODS, AND COMPUTER PROGRAM PRODUCTS FOR PERFORMING ONE OR MORE AVIATION RELATED OPERATIONS**

(30) Priority: 26.06.2024 IN 202411048925; 13.09.2024 US 202418884668
(71) Applicant: Honeywell International Inc., Charlotte, NC 28202 (US)
(72) Inventor: J, Kirupakar, Charlotte, 28202 (US); KHAN, Kalimulla, Charlotte, 28202 (US); BELLE, Mythili, Charlotte, 28202 (US); GOVINDILLAM, Sreenivasan, Charlotte, 28202 (US); KOUTSOGIANNIS, Angelo, Charlotte, 28202 (US)
(74) Representative: Haseltine Lake Kempner LLP

(57) **Abstract**

Systems, apparatuses, methods, and computer program products are provided herein. For example, a method may include establishing a first communication channel with the secondary portable aviation operations device and a second communication channel with an onboard aviation operations device, establishing a first communication channel with the secondary portable aviation operations device and a second communication channel with an onboard aviation operations device, securing the first communication channel with the secondary portable aviation operations device, receiving cloud aviation operations data from the secondary portable aviation operations device via the first communication channel, receiving onboard aviation operations data from the onboard aviation operations device via the second communication channel, performing one or more aviation related operations based at least in part on the cloud aviation operations data or the onboard aviation operations data.

## Description

### CROSS-REFERENCE TO RELATED APPLICATIONS

The present application claims priority to Indian Provisional Application No. 202411048925, titled "SYSTEMS, APPARATUSES, METHODS, AND COMPUTER PROGRAM PRODUCTS FOR PERFORMING ONE OR MORE AVIATION RELATED OPERATIONS," filed June 26, 2024, the contents of which are incorporated herein by reference in their entirety.

### TECHNOLOGICAL FIELD

Embodiments of the present disclosure relate generally to systems, apparatuses, methods, and computer program products for performing one or more aviation related operations.

### BACKGROUND

Applicant has identified many technical challenges and difficulties associated with systems, apparatuses, methods, and computer program products for performing one or more aviation related operations. Through applied effort, ingenuity, and innovation, Applicant has solved problems related to systems, apparatuses, methods, and computer program products for performing one or more aviation related operations by developing solutions embodied in the present disclosure, which are described in detail below.

### BRIEF SUMMARY

Various embodiments described herein relate to systems, apparatuses, methods, and computer program products for initiating performance of one or more aviation related operations.

In accordance with one aspect of the disclosure, a system is provided. In some embodiments, the system comprises a secondary portable aviation operations device. In some embodiments, the system comprises a primary portable aviation operations device. In some embodiments, the primary portable aviation operations device comprises memory and one or more processors communicatively coupled to the memory. In some embodiments, the one or more processors are configured to establish a first communication channel with the secondary portable aviation operations device and a second communication channel with an onboard aviation operations device. In some embodiments, the one or more processors are configured to secure the first communication channel with the secondary portable aviation operations device. In some embodiments, the one or more processors are configured to receive cloud aviation operations data from the secondary portable aviation operations device via the first communication channel. In some embodiments, the one or more processors are configured to receive onboard aviation operations data from the onboard aviation operations device via the second communication channel. In some embodiments, the one or more processors are configured to perform one or more aviation related operations based at least in part on the cloud aviation operations data or the onboard aviation operations data.

In some embodiments, the secondary portable aviation operations device comprises second memory and one or more second processors communicatively coupled to the second memory. In some embodiments, the one or more second processors are configured to establish a third communication channel with a cloud aviation operations device. In some embodiments, the one or more second processors are configured to receive the cloud aviation operations data from the cloud aviation operations device via the third communication channel.

In some embodiments, the third communication channel is unsecured.

In some embodiments, the one or more processors are configured to terminate the second communication channel with the onboard aviation operations device.

In some embodiments, the one or more processors are configured to establish a fourth communication channel with the cloud aviation operations device.

In some embodiments, the one or more second processors are configured to terminate the third communication channel with the cloud aviation operations device. In some embodiments, the one or more second processors are configured to establish a fifth communication channel with the onboard aviation operations device.

In some embodiments, the one or more second processors are configured to generate cached cloud aviation operations data by storing the cloud aviation operations data in a local cache. In some embodiments, the one or more second processors are configured to determine that the third communication channel is malfunctioning. In some embodiments, the one or more second processors are configured to, in response to the determination that the third communication channel is malfunctioning, transmit the cached cloud aviation operations data to the primary portable aviation operations device.

In some embodiments, the onboard aviation operations device is physically secured to an aircraft.

In some embodiments, the onboard aviation operations device is a flight management system.

In some embodiments, the primary portable aviation operations device is a first electronic flight bag and the secondary portable aviation operations device is a second electronic flight bag.

In some embodiments, securing the first communication channel with the secondary portable aviation operations device comprises the one or more processors being further configured to generate an operations key. In some embodiments, securing the first communication channel with the secondary portable aviation operations device comprises the one or more processors being further configured to generate a primary public key and a primary private key. In some embodiments, securing the first communication channel with the secondary portable aviation operations device comprises the one or more processors being further configured to transmit the primary public key to the secondary portable aviation operations device. In some embodiments, securing the first communication channel with the secondary portable aviation operations device comprises the one or more processors being further configured to encrypt the operations key using a secondary public key. In some embodiments, securing the first communication channel with the secondary portable aviation operations device comprises the one or more processors being further configured to transmit the operations key to the secondary portable aviation operations device.

In some embodiments, the one or more processors are configured to generate an updated operations key after a time period.

In some embodiments, the one or more processors are configured to convert the operations key into an operations hash. In some embodiments, the one or more processors are configured to transmit the operations hash to the secondary portable aviation operations device.

In some embodiments, the one or more second processors are configured to encrypt the cloud aviation operations data using the operations key.

In some embodiments, the first communication channel, the second communication channel, and the third communication channel are simultaneously active.

In accordance with another aspect of the disclosure, a method is provided. In some embodiments, the method may include establishing a first communication channel with a secondary portable aviation operations device and a second communication channel with an onboard aviation operations device. In some embodiments, the method may include securing the first communication channel with the secondary portable aviation operations device. In some embodiments, the method may include receiving cloud aviation operations data from the secondary portable aviation operations device via the first communication channel. In some embodiments, the method may include receiving onboard aviation operations data from the onboard aviation operations device via the second communication channel. In some embodiments, the method may include performing one or more aviation related operations based at least in part on the cloud aviation operations data or the onboard aviation operations data.

In some embodiments, securing the first communication channel with the secondary portable aviation operations device includes generating an operations key. In some embodiments, the method may include securing the first communication channel with the secondary portable aviation operations device includes generating a primary public key and a primary private key. In some embodiments, the method may include securing the first communication channel with the secondary portable aviation operations device includes transmitting the primary public key to the secondary portable aviation operations device. In some embodiments, the method may include securing the first communication channel with the secondary portable aviation operations device includes encrypting the operations key using a secondary public key. In some embodiments, the method may include securing the first communication channel with the secondary portable aviation operations device includes transmitting the operations key to the secondary portable aviation operations device.

In some embodiments, the method may include generating an updated operations key after a time period.

In some embodiments, the method may include establishing a third communication channel with a cloud aviation operations device. In some embodiments, the method may include receiving the cloud aviation operations data from the cloud aviation operations device via the third communication channel.

In some embodiments, the first communication channel, the second communication channel, and the third communication channel are simultaneously active.

In accordance with another aspect of the disclosure, a computer program product is provided. In some embodiments, the computer program product includes at least one non-transitory computer-readable storage medium having computer program code stored thereon. In some embodiments, the computer program code, in execution with at least one processor, configures the computer program product for establishing a first communication channel with a secondary portable aviation operations device and a second communication channel with an onboard aviation operations device. In some embodiments, the computer program code, in execution with at least one processor, configures the computer program product for securing the first communication channel with the secondary portable aviation operations device. In some embodiments, the computer program code, in execution with at least one processor, configures the computer program product for receiving cloud aviation operations data from the secondary portable aviation operations device via the first communication channel. In some embodiments, the computer program code, in execution with at least one processor, configures the computer program product for receiving onboard aviation operations data from the onboard aviation operations device via the second communication channel. In some embodiments, the computer program code, in execution with at least one processor, configures the computer program product for performing one or more aviation related operations based at least in part on the cloud aviation operations data or the onboard aviation operations data.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates an example block diagram of an environment in which embodiments of the present disclosure may operate;
FIG. 2 illustrates an example block diagram of an example apparatus that may be specially configured in accordance with an example embodiment of the present disclosure;
FIG. 3 illustrates an example block diagram associated with an aircraft in accordance with one or more embodiments of the present disclosure;
FIG. 4 illustrates an example interface in accordance with one or more embodiments of the present disclosure;
FIG. 5 illustrates a flowchart of an example method in accordance with one or more embodiments of the present disclosure;
FIG. 6 illustrates a flowchart of another example method in accordance with one or more embodiments of the present disclosure;
FIG. 7 illustrates a flowchart of another example method in accordance with one or more embodiments of the present disclosure; and
FIG. 8 illustrates a flowchart of an example method in accordance with one or more embodiments of the present disclosure.

### DETAILED DESCRIPTION

Some embodiments of the present disclosure will now be described more fully herein with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The use of the term "circuitry" as used herein with respect to components of a system, or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communication circuitry, input/output circuitry, and the like. In some embodiments, other elements may provide or supplement the functionality of particular circuitry. Alternatively, or additionally, in some embodiments, other elements of a system and/or apparatus described herein may provide or supplement the functionality of another particular set of circuitry. For example, a processor may provide processing functionality to any of the sets of circuitry, a memory may provide storage functionality to any of the sets of circuitry, communications circuitry may provide network interface functionality to any of the sets of circuitry, and/or the like.

### Overview

Example embodiments disclosed herein address technical problems associated with performing one or more aviation related operations. As would be understood by one skilled in the field to which this disclosure pertains, there are numerous example scenarios in which it may be desirable to perform one or more aviation related operations.

In many applications, systems, apparatuses, methods, and computer program products for performing one or more aviation related operations are desirable. In some implementations, it may be desirable to perform one or more aviation related operations based on cloud aviation operations data (e.g., data generated by a cloud aviation operations device) and/or onboard aviation operations data (e.g., data generated by an onboard aviation operations device). For example, it may be desirable for a portable aviation operations device (e.g., an electronic flight bag) to perform one or more aviation related operations using cloud aviation operations data and/or onboard aviation operations data. In this way, a portable aviation operations device can leverage both onboard aviation operations devices (e.g., a flight management system) and cloud aviation operations devices to implement a variety of aviation related operations.

Example solutions for performing one or more aviation related operations include using a device to interact with an onboard component of an aircraft and/or a cloud-based component associated with the aircraft. However, in such example solutions, devices are unable to simultaneously connect to both an onboard component of the aircraft and a cloud-based component associated with the aircraft due to the stringent security requirements required by onboard components of an aircraft. For example, in such example solutions, if a device was used to connect to both an onboard component of the aircraft and a cloud component associated with the aircraft simultaneously, the device could be used to facilitate an intrusion into the onboard components of the aircraft by a malicious actor. Additionally, in such example solutions, a device is unable to establish secure communication channels for communicating between various devices. Additionally, in such example solutions, devices are unable to adapt when connection with the cloud component associated with the component is lost (e.g., when the aircraft is located in a polar region or an oceanic region). Accordingly, there is a need for systems, apparatuses, methods, and computer program products for performing one or more aviation related operations based on cloud aviation operations data and/or onboard aviation operations data in a simultaneous, secure, and reliable manner.

Thus, to address these and/or other issues related to such example solutions, example systems, apparatuses, methods, and computer program products for performing one or more aviation related operations are disclosed herein. For example, an embodiment, in this disclosure, described in greater detail below, includes a system that includes a secondary portable aviation operations device and a primary portable aviation operations device. In some embodiments, the primary portable aviation operations device is caused to establish a first communication channel with the secondary portable aviation operations device and a second communication channel with an onboard aviation operations device, secure the first communication channel with the secondary portable aviation operations device, receive cloud aviation operations data from the secondary portable aviation operations device via the first communication channel, receive onboard aviation operations data from the onboard aviation operations device via the second communication channel, perform one or more aviation related operations based at least in part on the cloud aviation operations data or the onboard aviation operations data. In some embodiments, the secondary portable aviation operations device is caused to generate cached cloud aviation operations data. In some embodiments, the secondary portable aviation operations device is caused to establish a third communication channel with a cloud aviation operations device. Accordingly, the systems, apparatuses, methods, and computer program products disclosed herein enable performing one or more aviation operations in a simultaneous, secure, and reliable manner.

### Example Systems and Apparatuses

Embodiments of the present disclosure herein include systems, apparatuses, methods, and computer program products configured for performing one or more aviation related operations. It should be readily appreciated that the embodiments of the apparatus, systems, methods, and computer program product described herein may be configured in various additional and alternative manners in addition to those expressly described herein.

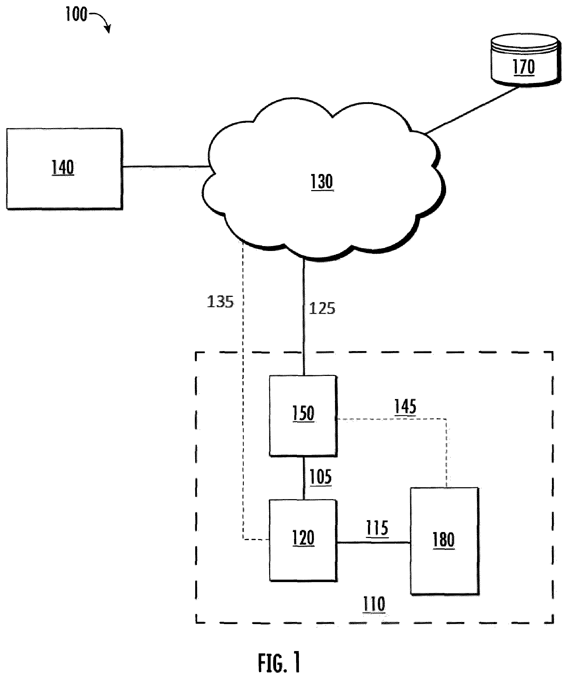

FIG. 1 illustrates an example block diagram of an environment 100 in which embodiments of the present disclosure may operate. Specifically, FIG. 1 illustrates an aircraft 110. In some embodiments, the aircraft 110 is any machine, robot, computing devices, and/or apparatus comprised of hardware, software, firmware, and/or any combination thereof, that maneuvers throughout an environment through a medium, such as air. In some contexts, the aircraft 110 is utilized to transport objects, entities (e.g., people, animals, or other beings), or other onboard cargo. In some situations, the aircraft 110 may be transporting no object except for the aircraft itself. Examples of the aircraft 110 include airplanes, helicopters, drones, and/or the like. In some embodiments, the aircraft 110 is not limited to the examples listed herein and may include other types of transportation device.

In some embodiments, the aircraft 110 is associated with a determinable location. The determinable location of the aircraft 110 in some embodiments represents an absolute position (e.g., GPS coordinates, latitude and longitude locations, an address, and/or the like) or a relative position of the aircraft 110 (e.g., an identifier representing the location of the aircraft 110 as compared to one or more other aircrafts, one or more buildings (e.g., an airport), an enterprise headquarters, or general description in the world for example based at least in part on continent, state, ocean, or other definable region). In some embodiments, the aircraft 110 includes or otherwise is associated with a location sensor and/or software-driven location services that provide the location data corresponding to the aircraft 110. In other embodiments, the location of the aircraft 110 is stored and/or otherwise determinable to one or more systems.

The network 130 may be embodied in any of a myriad of network configurations. In some embodiments, the network 130 may be a public network (e.g., the Internet). In some embodiments, the network 130 may be a private network (e.g., an internal localized, or closed- off network between particular devices). In some other embodiments, the network 130 may be a hybrid network (e.g., a network enabling internal communications between particular connected devices and external communications with other devices). In various embodiments, the network 130 may include one or more base station(s), relay(s), router(s), switch(es), cell tower(s), communications cable(s), routing station(s), and/or the like. In various embodiments, components of the environment 100 may be communicatively coupled to transmit data to and/or receive data from one another over the network 130. Such configuration(s) include, without limitation, a wired or wireless Personal Area Network (PAN), Local Area Network (LAN), Metropolitan Area Network (MAN), Wide Area Network (WAN), and/or the like.

In some embodiments, the environment 100 includes a cloud aviation operations device 140. In some embodiments, the cloud aviation operations device 140 is electronically and/or communicatively coupled to the aircraft 110, a secondary portable aviation operations device 150, a primary portable aviation operations device 120, and/or an onboard aviation operations device 180. The cloud aviation operations device 140 may be located remotely from the aircraft 110. In this regard, for example, the cloud aviation operations device 140 may be located in a remote cloud server and electronically and/or communicatively coupled to the aircraft 110, the secondary portable aviation operations device 150, the primary portable aviation operations device 120, and/or the onboard aviation operations device 180 via at least the network 130. In some embodiments, the cloud aviation operations device 140 is configured via hardware, software, firmware, and/or a combination thereof, to perform data intake of one or more types of data, such as cloud aviation operations data, onboard aviation operations data, cached cloud aviation operations data, and/or the like. Additionally, or alternatively, in some embodiments, the cloud aviation operations device 140 is configured via hardware, software, firmware, and/or a combination thereof, to generate and/or transmit command(s) that control, adjust, or otherwise impact operations of one or more of the aircraft 110, the secondary portable aviation operations device 150, the primary portable aviation operations device 120, and/or the onboard aviation operations device 180. For example, the cloud aviation operations device 140 may be configured to perform one or more aviation related operations. Additionally, or alternatively, in some embodiments, the cloud aviation operations device 140 is configured via hardware, software, firmware, and/or a combination thereof, to perform data reporting, provide data, and/or other data output process(es) associated with monitoring or otherwise analyzing operations of one or more of the aircraft 110, the secondary portable aviation operations device 150, the primary portable aviation operations device 120, and/or the onboard aviation operations device 180. For example, in various embodiments, the cloud aviation operations device 140 may be configured to execute and/or perform one or more operations and/or functions described herein.

In some embodiments, the environment 100 includes the secondary portable aviation operations device 150. In some embodiments, the secondary portable aviation operations device 150 is electronically and/or communicatively coupled to the aircraft 110, the cloud aviation operations device 140, the primary portable aviation operations device 120, and/or the onboard aviation operations device 180. The secondary portable aviation operations device 150 may be located remotely from the aircraft 110 (e.g., in a control tower at an airport), in proximity of the aircraft (e.g., with a pilot at an airport gate associated with the aircraft), and/or within the aircraft 110 (e.g., with the pilot in the aircraft). In this regard, for example, the secondary portable aviation operations device 150 may be portable. In some embodiments, the secondary portable aviation operations device 150 is an electronic flight bag (e.g., an electronic flight bag associated with the second in command pilot of the aircraft 110 (e.g., a first officer)). In some embodiments, the secondary portable aviation operations device 150 is configured via hardware, software, firmware, and/or a combination thereof, to perform data intake of one or more types of data, such as cloud aviation operations data, onboard aviation operations data, cached cloud aviation operations data, and/or the like. Additionally, or alternatively, in some embodiments, the secondary portable aviation operations device 150 is configured via hardware, software, firmware, and/or a combination thereof, to generate and/or transmit command(s) that control, adjust, or otherwise impact operations of one or more of the aircraft 110, the cloud aviation operations device 140, the primary portable aviation operations device 120, and/or the onboard aviation operations device 180. For example, the secondary portable aviation operations device 150 may be configured to perform one or more aviation related operations. Additionally, or alternatively, in some embodiments, the secondary portable aviation operations device 150 is configured via hardware, software, firmware, and/or a combination thereof, to perform data reporting, provide data, and/or other data output process(es) associated with monitoring or otherwise analyzing operations of one or more of the aircraft 110, the cloud aviation operations device 140, the primary portable aviation operations device 120, and/or the onboard aviation operations device 180. For example, in various embodiments, the secondary portable aviation operations device 150 may be configured to execute and/or perform one or more operations and/or functions described herein.

In some embodiments, the environment 100 includes the primary portable aviation operations device 120. In some embodiments, the primary portable aviation operations device 120 is electronically and/or communicatively coupled to the aircraft 110, the cloud aviation operations device 140, the secondary portable aviation operations device 150, and/or the onboard aviation operations device 180. The primary portable aviation operations device 120 may be located remotely from the aircraft 110 (e.g., in a control tower at an airport), in proximity of the aircraft (e.g., with a pilot at an airport gate associated with the aircraft), and/or within the aircraft 110 (e.g., with the pilot in the aircraft). In this regard, for example, the primary portable aviation operations device 120 may be portable. In some embodiments, the primary portable aviation operations device 120 is an electronic flight bag (e.g., an electronic flight bag associated with the first in command pilot of the aircraft 110 (e.g., a captain)). In some embodiments, the primary portable aviation operations device 120 is configured via hardware, software, firmware, and/or a combination thereof, to perform data intake of one or more types of data, such as cloud aviation operations data, onboard aviation operations data, cached cloud aviation operations data, and/or the like. Additionally, or alternatively, in some embodiments, the primary portable aviation operations device 120 is configured via hardware, software, firmware, and/or a combination thereof, to generate and/or transmit command(s) that control, adjust, or otherwise impact operations of one or more of the aircraft 110, the secondary portable aviation operations device 150, the cloud aviation operations device 140, and/or the onboard aviation operations device 180. For example, the primary portable aviation operations device 120 may be configured to perform one or more aviation related operations. Additionally, or alternatively, in some embodiments, the primary portable aviation operations device 120 is configured via hardware, software, firmware, and/or a combination thereof, to perform data reporting, provide data, and/or other data output process(es) associated with monitoring or otherwise analyzing operations of one or more of the aircraft 110, the cloud aviation operations device 140, the secondary portable aviation operations device 150, and/or the onboard aviation operations device 180. For example, in various embodiments, the primary portable aviation operations device 120 may be configured to execute and/or perform one or more operations and/or functions described herein.

In some embodiments, the environment 100 includes the onboard aviation operations device 180. In some embodiments, the onboard aviation operations device 180 is electronically and/or communicatively coupled to the aircraft 110, the cloud aviation operations device 140, the primary portable aviation operations device 120, and/or the secondary portable aviation operations device 150. The onboard aviation operations device 180 may be located within the aircraft 110. In this regard, for example may be one or more individual components of the aircraft that perform a particular function during operation of the aircraft 110. For example, the onboard aviation operations device 180 may include one or more of multi-function control and display units (MCDU), flight management systems (FMS), inertial reference systems (IRS), sensors, actuators, primary flight displays, and/or the like. In this regard, for example, the individual components of the aircraft 110 may include components associated with a particular process or operation performed by the aircraft 110. In some embodiments, the onboard aviation operations device 180 is physically secured to the aircraft 110.

In some embodiments, the onboard aviation operations device 180 is configured via hardware, software, firmware, and/or a combination thereof, to perform data intake of one or more types of data, such as cloud aviation operations data, onboard aviation operations data, cached cloud aviation operations data, and/or the like. Additionally, or alternatively, in some embodiments, the onboard aviation operations device 180 is configured via hardware, software, firmware, and/or a combination thereof, to generate and/or transmit command(s) that control, adjust, or otherwise impact operations of one or more of the aircraft 110, the cloud aviation operations device 140, the primary portable aviation operations device 120, and/or the secondary portable aviation operations device 150. For example, the onboard aviation operations device 180 may be configured to perform one or more aviation related operations. Additionally, or alternatively, in some embodiments, the onboard aviation operations device 180 is configured via hardware, software, firmware, and/or a combination thereof, to perform data reporting, provide data, and/or other data output process(es) associated with monitoring or otherwise analyzing operations of one or more of the aircraft 110, the cloud aviation operations device 140, the primary portable aviation operations device 120, and/or the secondary portable aviation operations device 150. For example, in various embodiments, the onboard aviation operations device 180 may be configured to execute and/or perform one or more operations and/or functions described herein.

The one or more databases 170 may be configured to receive, store, and/or transmit data. For example, the one or more databases 170 may be configured to receive, store, and/or transmit data associated with the aircraft 110, the cloud aviation operations device 140, the primary portable aviation operations device 120, the onboard aviation operations device 180, and/or the secondary portable aviation operations device 150. In this regard, for example, the one or more databases 170 may be configured to receive, store, and/or transmit cloud aviation operations data, onboard aviation operations data, cached cloud aviation operations data, and/or the like. The one or more databases 170 may be located remotely from the aircraft 110, in proximity of the aircraft, and/or within the aircraft 110.

Additionally, while FIG. 1 illustrates certain components as separate, standalone entities communicating over the network 130, various embodiments are not limited to this configuration. In other embodiments, one or more components may be directly connected and/or share hardware or the like. For example, in some embodiments, the cloud aviation operations device 140 may include the one or more databases 170.

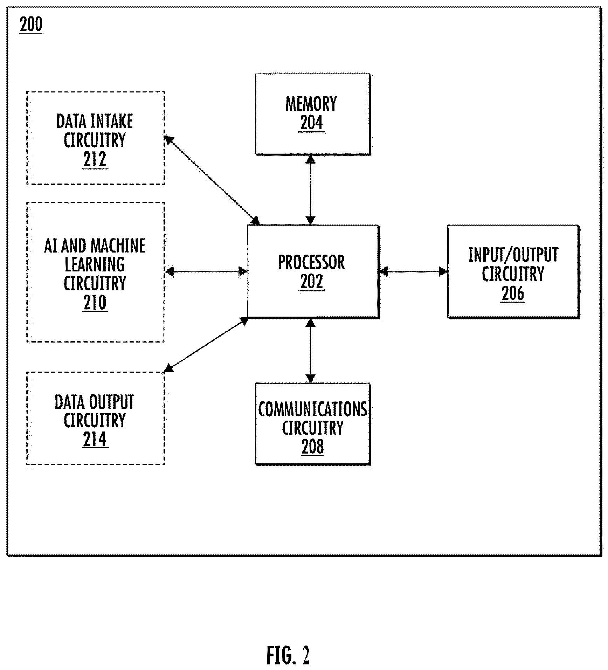

FIG. 2 illustrates an example block diagram of an example apparatus that may be specially configured in accordance with an example embodiment of the present disclosure. Specifically, FIG. 2 depicts an example computing apparatus 200 ("apparatus 200") specially configured in accordance with at least some example embodiments of the present disclosure. For example, the computing apparatus 200 may be embodied as one or more of a specifically configured personal computing apparatus, a specifically configured cloud-based computing apparatus, a specifically configured embedded computing device (e.g., configured for edge computing, and/or the like). Examples of an apparatus 200 may include, but is not limited to, the cloud aviation operations device 140, the primary portable aviation operations device 120, the onboard aviation operations device 180, the secondary portable aviation operations device 150, the one or more databases 170, and/or the aircraft 110. The apparatus 200 includes processor 202, memory 204, input/output circuitry 206, communications circuitry 208, and/or optional artificial intelligence ("AI") and machine learning circuitry 210. In some embodiments, the apparatus 200 is configured to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), memory(ies), circuitry(ies), and/or the like to perform their associated functions such that duplicate hardware is not required for each set of circuitry.

In various embodiments, such as computing apparatus 200 of the cloud aviation operations device 140, the primary portable aviation operations device 120, the onboard aviation operations device 180, and/or the secondary portable aviation operations device 150 may refer to, for example, one or more computers, computing entities, desktop computers, mobile phones, tablets, phablets, notebooks, laptops, distributed systems, servers, or the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein. In one embodiment, these functions, operations, and/or processes can be performed on data, content, information, and/or similar terms used herein. In this regard, the apparatus 200 embodies a particular, specially configured computing entity transformed to enable the specific operations described herein and provide the specific advantages associated therewith, as described herein.

Processor 202 or processor circuity 202 may be embodied in a number of different ways. In various embodiments, the use of the terms "processor" should be understood to include a single core processor, a multi-core processor, multiple processors internal to the apparatus 200, and/or one or more remote or "cloud" processor(s) external to the apparatus 200. In some example embodiments, processor 202 may include one or more processing devices configured to perform independently. Alternatively, or additionally, processor 202 may include one or more processor(s) configured in tandem via a bus to enable independent execution of operations, instructions, pipelining, and/or multithreading.

In an example embodiment, the processor 202 may be configured to execute instructions stored in the memory 204 or otherwise accessible to the processor. Alternatively, or additionally, the processor 202 may be configured to execute hard-coded functionality. As such, whether configured by hardware or software methods, or by a combination thereof, processor 202 may represent an entity (e.g., physically embodied in circuitry) capable of performing operations according to embodiments of the present disclosure while configured accordingly. Alternatively, or additionally, processor 202 may be embodied as an executor of software instructions, and the instructions may specifically configure the processor 202 to perform the various algorithms embodied in one or more operations described herein when such instructions are executed. In some embodiments, the processor 202 includes hardware, software, firmware, and/or a combination thereof that performs one or more operations described herein.

In some embodiments, the processor 202 (and/or co-processor or any other processing circuitry assisting or otherwise associated with the processor) is/are in communication with the memory 204 via a bus for passing information among components of the apparatus 200.

Memory 204 or memory circuitry 204 may be non-transitory and may include, for example, one or more volatile and/or non-volatile memories. In some embodiments, the memory 204 includes or embodies an electronic storage device (e.g., a computer readable storage medium). In some embodiments, the memory 204 is configured to store information, data, content, applications, instructions, or the like, for enabling an apparatus 200 to carry out various operations and/or functions in accordance with example embodiments of the present disclosure.

Input/output circuitry 206 may be included in the apparatus 200. In some embodiments, input/output circuitry 206 may provide output to the user and/or receive input from a user. The input/output circuitry 206 may be in communication with the processor 202 to provide such functionality. The input/output circuitry 206 may comprise one or more user interface(s). In some embodiments, a user interface may include a display that comprises the interface(s) rendered as a web user interface, an application user interface, a user device, a backend system, or the like. In some embodiments, the input/output circuitry 206 also includes a keyboard, a mouse, a j oystick, a touch screen, touch areas, soft keys a microphone, a speaker, or other input/output mechanisms. The processor 202 and/or input/output circuitry 206 comprising the processor may be configured to control one or more operations and/or functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a computing device and/or other display associated with a user.

Communications circuitry 208 may be included in the apparatus 200. The communications circuitry 208 may include any means such as a device or circuitry embodied in either hardware or a combination of hardware and software that is configured to receive and/or transmit data from/to a network and/or any other device, circuitry, or module in communication with the apparatus 200. In some embodiments the communications circuitry 208 includes, for example, a network interface for enabling communications with a wired or wireless communications network. Additionally, or alternatively, the communications circuitry 208 may include one or more network interface card(s), antenna(s), bus(es), switch(es), router(s), modem(s), and supporting hardware, firmware, and/or software, or any other device suitable for enabling communications via one or more communications network(s). In some embodiments, the communications circuitry 208 may include circuitry for interacting with an antenna(s) and/or other hardware or software to cause transmission of signals via the antenna(s) and/or to handle receipt of signals received via the antenna(s). In some embodiments, the communications circuitry 208 enables transmission to and/or receipt of data from a user device, one or more sensors, and/or other external computing device(s) in communication with the apparatus 200.

Data intake circuitry 212 may be included in the apparatus 200. The data intake circuitry 212 may include hardware, software, firmware, and/or a combination thereof, designed and/or configured to capture, receive, request, and/or otherwise gather data associated with operations of the aircraft 110. In some embodiments, the data intake circuitry 212 includes hardware, software, firmware, and/or a combination thereof, that communicates with one or more sensor(s) component(s), and/or the like within the aircraft 110 to receive particular data associated with such operations of the aircraft 110. Additionally, or alternatively, in some embodiments, the data intake circuitry 212 includes hardware, software, firmware, and/or a combination thereof, that retrieves particular data associated with the aircraft 110 from one or more data repository/repositories accessible to the apparatus 200.

AI and machine learning circuitry 210 may be included in the apparatus 200. The AI and machine learning circuitry 210 may include hardware, software, firmware, and/or a combination thereof designed and/or configured to request, receive, process, generate, and transmit data, data structures, control signals, and electronic information for training and executing a trained AI and machine learning model configured for facilitating the operations and/or functionalities described herein. For example, in some embodiments the AI and machine learning circuitry 210 includes hardware, software, firmware, and/or a combination thereof, that identifies training data and/or utilizes such training data for training a particular machine learning model, AI, and/or other model to generate particular output data based at least in part on learnings from the training data. Additionally, or alternatively, in some embodiments, the AI and machine learning circuitry 210 includes hardware, software, firmware, and/or a combination thereof, that embodies or retrieves a trained machine learning model, AI and/or other specially configured model utilized to process inputted data. Additionally, or alternatively, in some embodiments, the AI and machine learning circuitry 210 includes hardware, software, firmware, and/or a combination thereof that processes received data utilizing one or more algorithm(s), function(s), subroutine(s), and/or the like, in one or more pre-processing and/or subsequent operations that need not utilize a machine learning or AI model.

Data output circuitry 214 may be included in the apparatus 200. The data output circuitry 214 may include hardware, software, firmware, and/or a combination thereof, that configures and/or generates an output based at least in part on data processed by the apparatus 200. In some embodiments, the data output circuitry 214 includes hardware, software, firmware, and/or a combination thereof, that generates a particular report based at least in part on the processed data, for example where the report is generated based at least in part on a particular reporting protocol. Additionally, or alternatively, in some embodiments, the data output circuitry 214 includes hardware, software, firmware, and/or a combination thereof, that configures a particular output data object, output data file, and/or user interface for storing, transmitting, and/or displaying. For example, in some embodiments, the data output circuitry 214 generates and/or specially configures a particular data output for transmission to another system sub-system for further processing. Additionally, or alternatively, in some embodiments, the data output circuitry 214 includes hardware, software, firmware, and/or a combination thereof, that causes rendering of a specially configured user interface based at least in part on data received by and/or processing by the apparatus 200.

In some embodiments, two or more of the sets of circuitries 202-214 are combinable. Alternatively, or additionally, one or more of the sets of circuitry 202-214 perform some or all of the operations and/or functionality described herein as being associated with another circuitry. In some embodiments, two or more of the sets of circuitry 202-214 are combined into a single module embodied in hardware, software, firmware, and/or a combination thereof. For example, in some embodiments, one or more of the sets of circuitry, for example the AI and machine learning circuitry 210, may be combined with the processor 202, such that the processor 202 performs one or more of the operations described herein with respect to the AI and machine learning circuitry 210.

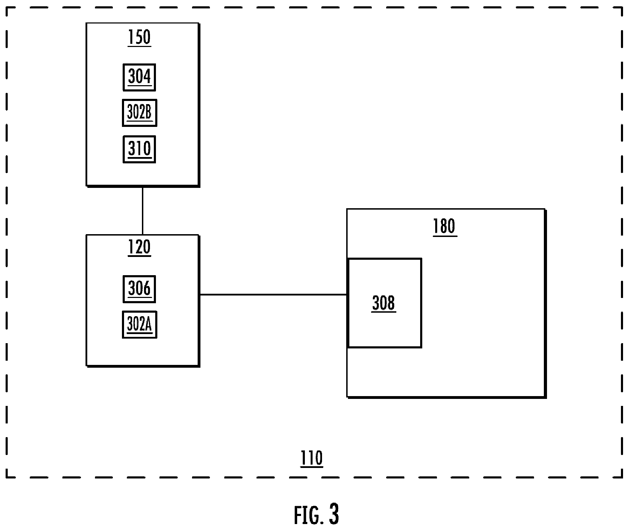

With reference to FIGS. 1-4, in some embodiments, the cloud aviation operations device 140 is configured to generate cloud aviation operations data. In some embodiments, cloud aviation operations data is one or more items of data indicative of weather information. For example, cloud aviation operations data may be indicative of weather information associated with a flight path of the aircraft 110 (e.g., weather that will occur at some point in a flight path of the aircraft 110). Additionally, or alternatively, cloud aviation operations data is one or more items of data indicative of an aviation hazard. For example, cloud aviation operations data may be indicative of an aviation hazard that could impact the aircraft 110 (e.g., delays at the intended landing airport of the aircraft 110). Additionally, or alternatively, cloud aviation operations data is one or more items of data indicative of flight level information. For example, cloud aviation operations data may be indicative of a flight level at a particular location in a flight path associated with the aircraft 110. Additionally, or alternatively, cloud aviation operations data is one or more items of data indicative of what if information. For example, cloud aviation operations data may be indicative of what if information that indicates alternatives available to the aircraft 110 if the aircraft is delayed in departing an airport, waypoint, and/or the like.

In some embodiments, the secondary portable aviation operations device 150 is configured to establish a third communication channel 125 with the cloud aviation operations device 140. In some embodiments, the third communication channel 125 is an electronic communication medium through which data may be transmitted. In some embodiments, the secondary portable aviation operations device 150 uses a cloud broker 304 to establish the third communication channel 125 with the cloud aviation operations device 140. In this regard, for example, the cloud broker 304 may be installed on the secondary portable aviation operations device 150. In some embodiments, the third communication channel 125 between the cloud aviation operations device 140 and the secondary portable aviation operations device is unsecured.

In some embodiments, the secondary portable aviation operations device 150 is configured to receive cloud aviation operations data from the cloud aviation operations device 140 via the third communication channel 125. In some embodiments, the secondary portable aviation operations device 150 is configured to receive cloud aviation operations data from the cloud aviation operations device 140 via the third communication channel 125. In this regard, for example, the cloud aviation operations device 140 may be configured to provide cloud aviation operations data to the secondary portable aviation operations device 150 in real-time.

In some embodiments, the onboard aviation operations device 180 is configured to generate onboard aviation operations data. In some embodiments, onboard aviation operations data is one or more items of data indicative of flight plan. For example, onboard aviation operations data may be indicative of a flight plan for a particular flight that the aircraft 110 is schedule to perform and/or currently performing.

In some embodiments, the primary portable aviation operations device 120 is configured to establish a first communication channel 105 with the secondary portable aviation operations device 150. In some embodiments, the first communication channel 105 is an electronic communication medium through which data may be transmitted. In some embodiments, the first communication channel 105 is established using a first software development kit 302A associated with the primary portable aviation operations device 120 and/or a second software development kit 302B associated with the secondary portable aviation operations device 150. In this regard, for example, the first software development kit 302A may be installed on the primary portable aviation operations device 120 and/or the second software development kit 302B may be installed on the secondary portable aviation operations device 150. In some embodiments, the first software development kit 302A may be a connected flight management system software development kit. Additionally, or alternatively, the second software development kit 302B may be a connected flight management system software development kit.

In some embodiments, the primary portable aviation operations device 120 is configured to establish a second communication channel 115 with the onboard aviation operations device 180. In some embodiments, the second communication channel 115 is an electronic communication medium through which data may be transmitted. In some embodiments, the second communication channel 115 is established using the first software development kit 302A associated with the primary portable aviation operations device 120 and/or an avionics gateway 308 associated with the onboard aviation operations device 180. In some embodiments, the first communication channel 105, the second communication channel 115, and the third communication channel 125 are configured to be active simultaneously. In this regard, for example, the primary portable aviation operations device 120 may be configured to receive cloud aviation operations data and onboard aviation operations data simultaneously.

In some embodiments, the primary portable aviation operations device 120 is configured to secure the first communication channel 105 with the secondary portable aviation operations device 150. In some embodiments, securing the first communication channel 105 includes the primary portable aviation operations device 120 being configured to generate an operations key. In some embodiments, an operations key is a unique cryptographic key shared between the primary portable aviation operations device 120 and the secondary portable aviation operations device 150 that may be used to encrypt and decrypt data transmitted between the primary portable aviation operations device 120 and the secondary portable aviation operations device 150. For example, the operations key may be used to encrypt and/or decrypt onboard aviation operations data, cloud aviation operations data, cached cloud aviation operations data, and/or the like.

In some embodiments, securing the first communication channel 105 includes the primary portable aviation operations device 120 being configured to generate a primary private key and a primary public key. In some embodiments, securing the first communication channel 105 includes the primary portable aviation operations device 120 being configured to transmit a primary public key to the secondary portable aviation operations device 150. In some embodiments, securing the first communication channel 105 includes the primary portable aviation operations device 120 being configured to receive a secondary public key from the secondary portable aviation operations device 150. In this regard, for example, the secondary portable aviation operations device 150 may be configured to generate a secondary public key and/or a secondary private key.

In some embodiments, securing the first communication channel 105 includes the primary portable aviation operations device 120 being configured to encrypt the operations key using the secondary public key. In some embodiments, securing the first communication channel 105 includes the primary portable aviation operations device 120 being configured to transmit an operations key to the secondary portable aviation operations device 150. For example, the primary portable aviation operations device 120 may be configured to transmit an operations key to the secondary portable aviation operations device 150 after the primary portable aviation operations device 120 has encrypted the operations key using the secondary public key. In this regard, for example, the primary portable aviation operations device 120 configured to generate an operations key and securely transmit it to the secondary portable aviation operations device 150 such that the primary portable aviation operations device 120 and the secondary portable aviation operations device 150 are both able to use the operations key to encrypt data transmitted between the primary portable aviation operations device 120 and the secondary portable aviation operations device 150. For example, the primary portable aviation operations device 120 and/or the secondary portable aviation operations device 150 may be configured to encrypt cloud aviation operations data, cached cloud aviation operations data, and/or onboard aviation operations data using the operations key.

In some embodiments, the primary portable aviation operations device 120 is configured to generate an updated operations key. In some embodiments, the primary portable aviation operations device 120 is configured to generate an updated operations key after a time period (e.g., after a time period has elapsed). In some embodiments, the time period may be a combination of one or seconds, minutes, hours, days, weeks, months, years, and/or the like. For example, the primary portable aviation operations device 120 may be configured to generate an updated operations key every 2 hours (e.g., when the time period is 2 hours). In some embodiments, the primary portable aviation operations device 120 and/or the secondary portable aviation operations device 150 are configured to encrypt cloud aviation operations data, cached cloud aviation operations data, and/or onboard aviation operations data using the updated operations key. In this regard, by generating an updated operations key after a time period, the primary portable aviation operations device 120 is configured to secure the first communication channel 105 between the primary portable aviation operations device 120 and the secondary portable aviation operations device 150 even in the event that an operations key is comprised (e.g., by ensuring that if an operations key is compromised by a malicious actor, the malicious actor only has access to the first communication channel 105 using the operations key until an updated operations key has been generated).

In some embodiments, the primary portable aviation operations device 120 is configured to convert the operations key into an operations hash. In some embodiments, converting the operations key into an operations hash includes the primary portable aviation operations device 120 being configured to use a hashing algorithm to convert the operations key into a fixed-length string of characters. In some embodiments, the primary portable aviation operations device 120 is configured to transmit an operations hash to the secondary portable aviation operations device 150. In this regard, for example, the primary portable aviation operations device 120 and/or the secondary portable aviation operations device 150 may be configured to verify the authenticity of an operations key using an operations hash.

Additionally, or alternatively, the secondary portable aviation operations device 150 is configured to secure the first communication channel 105 with the primary portable aviation operations device 120. In some embodiments, securing the first communication channel 105 includes the secondary portable aviation operations device 150 being configured to generate an operations key. In some embodiments, an operations key is a unique cryptographic key shared between the primary portable aviation operations device 120 and the secondary portable aviation operations device 150 that may be used to encrypt and decrypt data transmitted between the primary portable aviation operations device 120 and the secondary portable aviation operations device 150. For example, the operations key may be used to encrypt and/or decrypt onboard aviation operations data, cloud aviation operations data, cached cloud aviation operations data, and/or the like.

In some embodiments, securing the first communication channel 105 includes the secondary portable aviation operations device 150 being configured to generate a secondary private key and a secondary public key. In some embodiments, securing the first communication channel 105 includes the secondary portable aviation operations device 150 being configured to transmit a secondary public key to the primary portable aviation operations device 120. In some embodiments, securing the first communication channel 105 includes the secondary portable aviation operations device 150 being configured to receive a primary public key from the primary portable aviation operations device 120.

In some embodiments, securing the first communication channel 105 includes the secondary portable aviation operations device 150 being configured to encrypt an operations key using a primary public key. In some embodiments, securing the first communication channel 105 includes the secondary portable aviation operations device 150 being configured to transmit an operations key to the primary portable aviation operations device 120. For example, the secondary portable aviation operations device 150 may be configured to transmit an operations key to the primary portable aviation operations device 120 after the secondary portable aviation operations device 150 has encrypted the operations key using the primary public key. In this regard, for example, the secondary portable aviation operations device 150 is configured to generate an operations key and securely transmit it to the primary portable aviation operations device 120 such that the primary portable aviation operations device 120 and the secondary portable aviation operations device 150 are both able to use the operations key to encrypt data transmitted between the primary portable aviation operations device 120 and the secondary portable aviation operations device 150. For example, the primary portable aviation operations device 120 and/or the secondary portable aviation operations device 150 may be configured to encrypt cloud aviation operations data, cached cloud aviation operations data, and/or onboard aviation operations data using the operations key.

In some embodiments, the secondary portable aviation operations device 150 is configured to generate an updated operations key. In some embodiments, the secondary portable aviation operations device 150 is configured to generate an updated operations key after a time period (e.g., after a time period has elapsed). In some embodiments, the primary portable aviation operations device 120 and/or the secondary portable aviation operations device 150 are configured to encrypt cloud aviation operations data, cached cloud aviation operations data, and/or onboard aviation operations data using the updated operations key. In this regard, by generating an updated operations key after a time period, the secondary portable aviation operations device 150 is configured to secure the first communication channel 105 between the primary portable aviation operations device 120 and the secondary portable aviation operations device 150 even in the event that an operations key is comprised (e.g., by ensuring that if an operations key is compromised by a malicious actor, the malicious actor only has access to the first communication channel 105 using the operations key until an updated operations key has been generated).

In some embodiments, the secondary portable aviation operations device 150 is configured to convert the operations key into an operations hash. In some embodiments, converting the operations key into an operations hash includes the secondary portable aviation operations device 150 being configured to use a hashing algorithm to convert the operations key into a fixed-length string of characters. In some embodiments, the secondary portable aviation operations device 150 is configured to transmit an operations hash to the primary portable aviation operations device 120. In this regard, for example, the primary portable aviation operations device 120 and/or the secondary portable aviation operations device 150 may be configured to verify the authenticity of an operations key using an operations hash.

In some embodiments, the primary portable aviation operations device 120 is configured to receive cloud aviation operations data. In some embodiments, the primary portable aviation operations device 120 is configured to receive cloud aviation operations data from the secondary portable aviation operations device 150 via the first communication channel 105. In some embodiments, the primary portable aviation operations device 120 is configured to receive cloud aviation operations data via the first communication channel 105 after the first communication channel 105 has been secured. In some embodiments, the primary portable aviation operations device 120 is configured to receive onboard aviation operations data. In some embodiments, the primary portable aviation operations device 120 is configured to receive onboard aviation operations data from the onboard aviation operations device 180 via the second communication channel 115.

In some embodiments, the secondary portable aviation operations device 150 is configured to generate cached cloud aviation operations data. In some embodiments, the secondary portable aviation operations device 150 is configured to generate cached cloud aviation operations data by storing cloud aviation operations data in a local cache 310 of the secondary portable aviation operations device 150. In this regard, for example, cached cloud aviation operations data may be one or more items of data indicative of cloud aviation operations data that has been stored in the local cache 310 of the secondary portable aviation operations device 150.

In some embodiments, the secondary portable aviation operations device 150 is configured to determine that the third communication channel 125 is malfunctioning. In this regard, for example, the secondary portable aviation operations device 150 may be configured to determine that the third communication channel 125 is malfunctioning when the secondary portable aviation operations device 150 is unable to receive cloud aviation operations data from the cloud aviation operations device 140 via the third communication channel 125. In some embodiments, the third communication channel 125 may malfunction based on the location of the aircraft 110. For example, the third communication channel 125 may malfunction when the aircraft is located in a polar region and/or an oceanic region.

In some embodiments, the secondary portable aviation operations device 150 is configured to transmit cached cloud aviation operations data to the primary portable aviation operations device 120 (e.g., from the local cache 310 to the primary portable aviation operations device 120). In some embodiments, the secondary portable aviation operations device 150 is configured to transmit cached cloud aviation operations data to the primary portable aviation operations device 120 in response to the determination that the third communication channel 125 is malfunctioning. In this regard, for example, the primary portable aviation operations device 120 may still be able to receive at least some data generated by the cloud aviation operations device 140 (e.g., cached aviation operations data) when the third communication channel 125 is malfunctioning (e.g., when the aircraft 110 is located in a polar region and/or oceanic region).

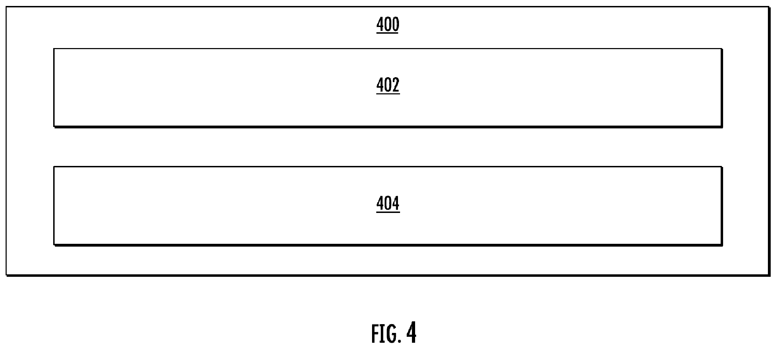

In some embodiments, the primary portable aviation operations device 120 is configured to perform one or more aviation related operations. In some embodiments, the primary portable aviation operations device 120 is configured to perform one or more aviation related operations based at least in part on onboard aviation operations data, cloud aviation operations data, and/or cached cloud aviation operations data. In this regard, for example, the primary portable aviation operations device 120 is configured to perform one or more aviation related operations that includes generating an onboard aviation operations interface component 402. In some embodiments, the onboard aviation operations interface component 402 is configured to display onboard aviation operations data. In some embodiments, the primary portable aviation operations device 120 is configured to perform one or more aviation related operations that includes causing the onboard aviation operations interface component 402 to be rendered on an aviation operations interface 400, such as illustrated in FIG. 4. In some embodiments, the aviation operations interface 400 may be presented on the primary portable aviation operations device 120.

In some embodiments, the primary portable aviation operations device 120 is configured to perform one or more aviation related operations that includes generating a cloud aviation operations interface component 404. In some embodiments, the cloud aviation operations interface component 404 is configured to display cloud aviation operations data. In some embodiments, the primary portable aviation operations device 120 is configured to perform one or more aviation related operations that includes causing the cloud aviation operations interface component 404 to be rendered the aviation operations interface 400, such as illustrated in FIG. 4.

In some embodiments, the primary portable aviation operations device 120 is configured to perform one or more aviation related operations that includes causing operation of the onboard aviation operations device 180. For example, the primary portable aviation operations device 120 may be configured to cause the onboard aviation operations device 180 to carry out a flight in accordance with a flight plan and/or weather information indicated by cloud aviation operations data, cached cloud aviation operations data, and/or onboard aviation operations data.

In some embodiments, the primary portable aviation operations device 120 is configured to terminate the second communication channel 115. In some embodiments, the primary portable aviation operations device 120 is configured to establish a fourth communication channel 135 with the cloud aviation operations device 140. In some embodiments, the fourth communication channel 135 is an electronic communication medium through which data may be transmitted. In some embodiments, the primary portable aviation operations device 120 is configured to establish the fourth communication channel 135 with the cloud aviation operations device 140 in response to the second communication channel 115 being terminated.

In some embodiments, the secondary portable aviation operations device 150 is configured to terminate the third communication channel 125. In some embodiments, the secondary portable aviation operations device 150 is configured to establish a fifth communication channel 145 with the onboard aviation operations device 180. In some embodiments, the fifth communication channel 145 is an electronic communication medium through which data may be transmitted. In some embodiments, the secondary portable aviation operations device 150 is configured to establish the fifth communication channel 145 with the onboard aviation operations device 180 in response to the third communication channel 125 being terminated.

In some embodiments, by terminating the second communication channel 115 and the third communication channel 125 and establishing the fourth communication channel 135 and fifth communication channel 145, the primary portable aviation operations device 120 and/or the secondary portable aviation operations device 150 are configured to swap roles in the environment 100. Said differently, for example, once the second communication channel 115 is terminated and the fourth communication channel 135 is established the primary portable aviation operations device 120 may be configured to function as the secondary portable aviation operations device 150. Similarly, for example, once the third communication channel 125 is terminated and the fifth communication channel 145 is established the secondary portable aviation operations device may be configured to function as the primary portable aviation operations device 120. In some embodiments, the primary portable aviation operations device 120 and/or the secondary portable aviation operations device 150 are configured to swap roles in the environment 100 in response to receiving an instruction to swap roles. For example, the primary portable aviation operations device 120 may be configured to receive an instruction to swap roles with the secondary portable aviation operations device 150.

### Example Methods

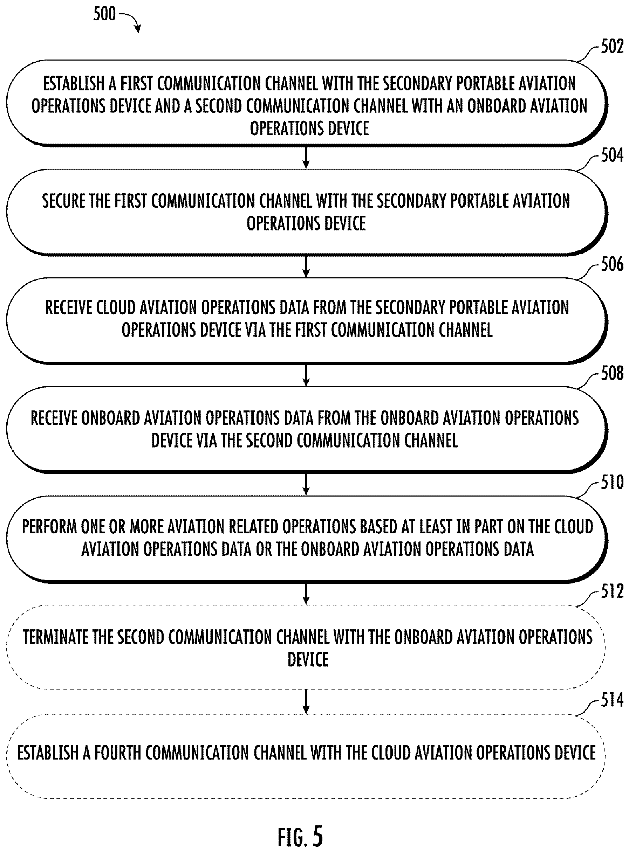

Referring now to FIG. 5, a flowchart providing an example method 500 is illustrated. In this regard, FIG. 5 illustrates operations that may be performed by the cloud aviation operations device 140, the primary portable aviation operations device 120, the secondary portable aviation operations device 150, the onboard aviation operations device 180, the aircraft 110, the one or more databases 170, and/or the like. In some embodiments, the method 500 includes operations for performing one or more related aviation related operations. In some embodiments, the example method 500 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 500.

As shown in block 502, the method 500 may include establishing a first communication channel with the secondary portable aviation operations device and a second communication channel with an onboard aviation operations device. As described above, in some embodiments, the first communication channel is established using a first software development kit associated with the primary portable aviation operations device and/or a second software development kit associated with the secondary portable aviation operations device. In this regard, for example, the first software development kit may be installed on the primary portable aviation operations device and/or the second software development kit may be installed on the secondary portable aviation operations device. In some embodiments, the first software development kit may be a connected flight management system software development kit. Additionally, or alternatively, the second software development kit may be a connected flight management system software development kit.

In some embodiments, the primary portable aviation operations device is configured to establish a second communication channel with the onboard aviation operations device. In some embodiments, the second communication channel is established using the first software development kit associated with the primary portable aviation operations device and/or an avionics gateway associated with the onboard aviation operations device.

As shown in block 504, the method 500 may include securing the first communication channel with the secondary portable aviation operations device. As described above, in some embodiments, the first communication channel is an electronic communication medium through which data may be transmitted.

As shown in block 506, the method 500 may include receiving cloud aviation operations data from the secondary portable aviation operations device via the first communication channel. As described above, in some embodiments, cloud aviation operations data is one or more items of data indicative of weather information. For example, cloud aviation operations data may be indicative of weather information associated with a flight path of the aircraft (e.g., weather that will occur at some point in a flight path of the aircraft). Additionally, or alternatively, cloud aviation operations data is one or more items of data indicative of an aviation hazard. For example, cloud aviation operations data may be indicative of an aviation hazard that could impact the aircraft (e.g., delays at the intended landing airport of the aircraft). Additionally, or alternatively, cloud aviation operations data is one or more items of data indicative of flight level information. For example, cloud aviation operations data may be indicative of a flight level at a particular location in a flight path associated with the aircraft. Additionally, or alternatively, cloud aviation operations data is one or more items of data indicative of what if information. For example, cloud aviation operations data may be indicative of what if information that indicates alternatives available to the aircraft if the aircraft is delayed in departing an airport, waypoint, and/or the like.

As shown in block 508, the method 500 may include receiving onboard aviation operations data from the onboard aviation operations device via the second communication channel. As described above, in some embodiments, onboard aviation operations data is one or more items of data indicative of flight plan. For example, onboard aviation operations data may be indicative of a flight plan for a particular flight that the aircraft is schedule to perform and/or currently performing.

As shown in block 510, the method 500 may include performing one or more aviation related operations based at least in part on the cloud aviation operations data or the onboard aviation operations data. As described above, in some embodiments, the primary portable aviation operations device is configured to perform one or more aviation related operations that includes generating an onboard aviation operations interface component. In some embodiments, the onboard aviation operations interface component is configured to display onboard aviation operations data. In some embodiments, the primary portable aviation operations device is configured to perform one or more aviation related operations that includes causing the onboard aviation operations interface component to be rendered on an aviation operations interface, such as illustrated in FIG. 4. In some embodiments, the aviation operations interface may be presented on the primary portable aviation operations device.

In some embodiments, the primary portable aviation operations device is configured to perform one or more aviation related operations that includes generating a cloud aviation operations interface component. In some embodiments, the cloud aviation operations interface component is configured to display cloud aviation operations data. In some embodiments, the primary portable aviation operations device is configured to perform one or more aviation related operations that includes causing the cloud aviation operations interface component to be rendered the aviation operations interface, such as illustrated in FIG. 4.

In some embodiments, the primary portable aviation operations device is configured to perform one or more aviation related operations that includes causing operation of the onboard aviation operations device. For example, the primary portable aviation operations device may be configured to cause the onboard aviation operations device to carry out a flight in accordance with a flight plan and/or weather information indicated by cloud aviation operations data, cached cloud aviation operations data, and/or onboard aviation operations data.

As shown in optional block 512, the method 500 may optionally include terminating the second communication channel with the onboard aviation operations device. As described above, in some embodiments, the second communication channel is an electronic communication medium through which data may be transmitted.

As shown in optional block 514, the method 500 may optionally include establishing a fourth communication channel with the cloud aviation operations device. In some embodiments, the primary portable aviation operations device. In some embodiments, the primary portable aviation operations device is configured to establish the fourth communication channel with the cloud aviation operations device in response to the second communication channel being terminated.

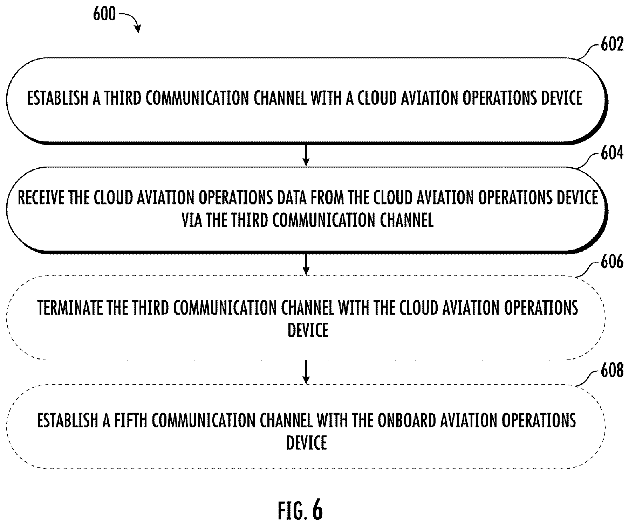

Referring now to FIG. 6, a flowchart providing an example method 600 is illustrated. In this regard, FIG. 6 illustrates operations that may be performed by the cloud aviation operations device 140, the primary portable aviation operations device 120, the secondary portable aviation operations device 150, the onboard aviation operations device 180, the aircraft 110, the one or more databases 170, and/or the like. In some embodiments, the method 600 includes operations for establishing a fifth communication channel. In some embodiments, the example method 600 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 600.

As shown in block 602, the method 600 may include establishing a third communication channel with a cloud aviation operations device. As described above, in some embodiments, the third communication channel is an electronic communication medium through which data may be transmitted. In some embodiments, the secondary portable aviation operations device uses a cloud broker to establish the third communication channel with the cloud aviation operations device. In this regard, for example, the cloud broker may be installed on the secondary portable aviation operations device. In some embodiments, the third communication channel between the cloud aviation operations device and the secondary portable aviation operations device is unsecured.

In some embodiments, the first communication channel 105, the second communication channel 115, and the third communication channel 125 are configured to be active simultaneously. In this regard, for example, the primary portable aviation operations device 120 may be configured to receive cloud aviation operations data and onboard aviation operations data simultaneously.

As shown in block 604, the method 600 may include receiving the cloud aviation operations data from the cloud aviation operations device via the third communication channel. As described above, in some embodiments, the secondary portable aviation operations device is configured to receive cloud aviation operations data from the cloud aviation operations device via the third communication channel. In this regard, for example, the cloud aviation operations device may be configured to provide cloud aviation operations data to the secondary portable aviation operations device in real-time.

As shown in optional block 606, the method 600 may optionally include terminating the third communication channel with the cloud aviation operations device. As described above, in some embodiments, the third communication channel is an electronic communication medium through which data may be transmitted.

As shown in optional block 608, the method 600 may optionally include establishing a fifth communication channel with the onboard aviation operations device. As described above, in some embodiments, the fifth communication channel is an electronic communication medium through which data may be transmitted. In some embodiments, the secondary portable aviation operations device is configured to establish the fifth communication channel with the onboard aviation operations device in response to the third communication channel being terminated.

In some embodiments, by terminating the second communication channel and the third communication channel and establishing the fourth communication channel and fifth communication channel, the primary portable aviation operations device and/or the secondary portable aviation operations device are configured to swap roles in the environment. Said differently, for example, once the second communication channel is terminated and the fourth communication channel is established the primary portable aviation operations device may be configured to function as the secondary portable aviation operations device. Similarly, for example, once the third communication channel is terminated and the fifth communication channel is established the secondary portable aviation operations device may be configured to function as the primary portable aviation operations device. In some embodiments, the primary portable aviation operations device and/or the secondary portable aviation operations device are configured to swap roles in the environment in response to receiving an instruction to swap roles. For example, the primary portable aviation operations device may be configured to receive an instruction to swap roles with the secondary portable aviation operations device.

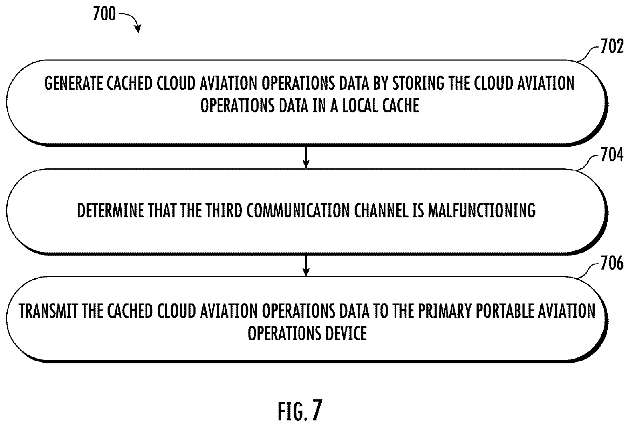

Referring now to FIG. 7, a flowchart providing an example method 700 is illustrated. In this regard, FIG. 7 illustrates operations that may be performed by the cloud aviation operations device 140, the primary portable aviation operations device 120, the secondary portable aviation operations device 150, the onboard aviation operations device 180, the aircraft 110, the one or more databases 170, and/or the like. In some embodiments, the method 700 includes operations for generating and transmitting cached cloud aviation operations data. In some embodiments, the example method 700 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 700.

As shown in block 702, the method 700 may include generating cached cloud aviation operations data by storing the cloud aviation operations data in a local cache. As described above, in some embodiments, the secondary portable aviation operations device is configured to generate cached cloud aviation operations data by storing cloud aviation operations data in a local cache of the secondary portable aviation operations device. In this regard, for example, cached cloud aviation operations data may be one or more items of data indicative of cloud aviation operations data that has been stored in the local cache of the secondary portable aviation operations device.

As shown in block 704, the method 700 may include determining that the third communication channel is malfunctioning. As described above, in some embodiments, the secondary portable aviation operations device may be configured to determine that the third communication channel is malfunctioning when the secondary portable aviation operations device is unable to receive cloud aviation operations data from the cloud aviation operations device via the third communication channel. In some embodiments, the third communication channel may malfunction based on the location of the aircraft. For example, the third communication channel may malfunction when the aircraft is located in a polar region and/or an oceanic region.

As shown in block 706, the method 700 may include transmitting the cached cloud aviation operations data to the primary portable aviation operations device. As described above, in some embodiments, the secondary portable aviation operations device is configured to transmit cached cloud aviation operations data to the primary portable aviation operations device in response to the determination that the third communication channel is malfunctioning. In this regard, for example, the primary portable aviation operations device may still be able to receive at least some data generated by the cloud aviation operations device (e.g., cached aviation operations data) when the third communication channel is malfunctioning (e.g., when the aircraft is located in a polar region and/or oceanic region).

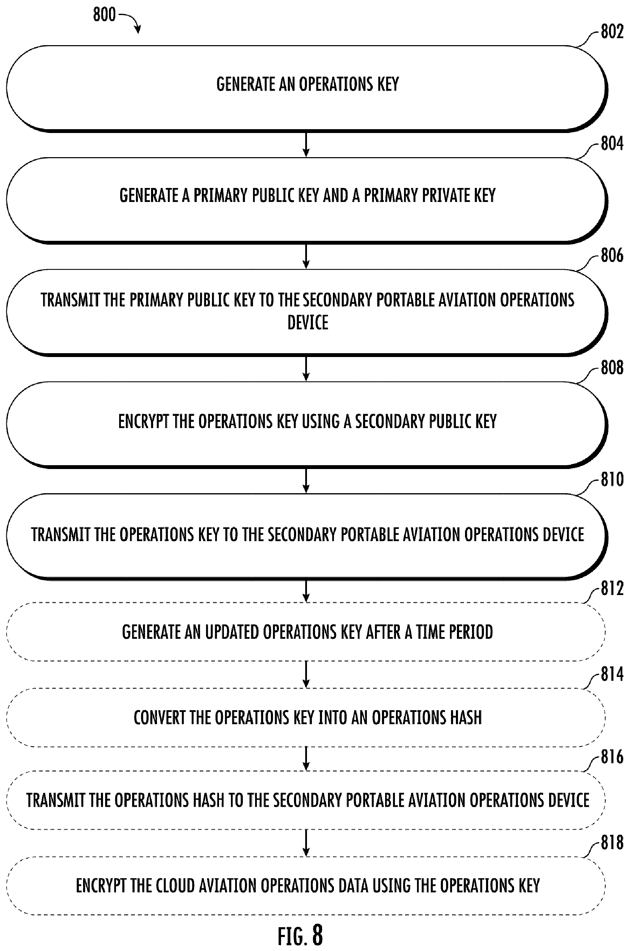

Referring now to FIG. 8, a flowchart providing an example method 800 is illustrated. In this regard, FIG. 8 illustrates operations that may be performed by the cloud aviation operations device 140, the primary portable aviation operations device 120, the secondary portable aviation operations device 150, the onboard aviation operations device 180, the aircraft 110, the one or more databases 170, and/or the like. In some embodiments, the method 800 includes operations for generating and transmitting an operations key to a secondary portable aviation operations device. In some embodiments, the example method 800 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 800.

As shown in block 802, the method 800 may include generating an operations key. As described above, in some embodiments, an operations key is a unique cryptographic key shared between the primary portable aviation operations device and the secondary portable aviation operations device that may be used to encrypt and decrypt data transmitted between the primary portable aviation operations device and the secondary portable aviation operations device. For example, the operations key may be used to encrypt and/or decrypt onboard aviation operations data, cloud aviation operations data, cached cloud aviation operations data, and/or the like.

As shown in block 804, the method 800 may include generating a primary public key and a primary private key. In this regard, for example, the primary public key and primary private key may be used for securing the first communication channel.

As shown in block 806, the method 800 may include transmitting the primary public key to the secondary portable aviation operations device. As described above, in some embodiments, securing the first communication channel includes the primary portable aviation operations device being configured to receive a secondary public key from the secondary portable aviation operations device. In this regard, for example, the secondary portable aviation operations device may be configured to generate a secondary public key and/or a secondary private key.

As shown in block 808, the method 800 may include encrypting the operations key using a secondary public key. As described above, in some embodiments, securing the first communication channel includes the primary portable aviation operations device being configured to encrypt the operations key using the secondary public key.

As shown in block 810, the method 800 may include transmitting the operations key to the secondary portable aviation operations device. As described above, in some embodiments, securing the first communication channel includes the primary portable aviation operations device being configured to transmit an operations key to the secondary portable aviation operations device. For example, the primary portable aviation operations device may be configured to transmit an operations key to the secondary portable aviation operations device after the primary portable aviation operations device has encrypted the operations key using the secondary public key. In this regard, for example, the primary portable aviation operations device configured to generate an operations key and securely transmit it to the secondary portable aviation operations device such that the primary portable aviation operations device and the secondary portable aviation operations device are both able to use the operations key to encrypt data transmitted between the primary portable aviation operations device and the secondary portable aviation operations device. For example, the primary portable aviation operations device and/or the secondary portable aviation operations device may be configured to encrypt cloud aviation operations data, cached cloud aviation operations data, and/or onboard aviation operations data using the operations key.

As shown in optional block 812, the method 800 may optionally include generating an updated operations key after a time period. As described above, in some embodiments, the primary portable aviation operations device is configured to generate an updated operations key after a time period (e.g., after a time period has elapsed). In some embodiments, the time period may be a combination of one or seconds, minutes, hours, days, weeks, months, years, and/or the like. For example, the primary portable aviation operations device may be configured to generate an updated operations key every 2 hours (e.g., when the time period is 2 hours). In some embodiments, the primary portable aviation operations device and/or the secondary portable aviation operations device are configured to encrypt cloud aviation operations data, cached cloud aviation operations data, and/or onboard aviation operations data using the updated operations key. In this regard, by generating an updated operations key after a time period, the primary portable aviation operations device is configured to secure the first communication channel between the primary portable aviation operations device and the secondary portable aviation operations device even in the event that an operations key is comprised (e.g., by ensuring that if an operations key is compromised by a malicious actor, the malicious actor only has access to the first communication channel using the operations key until an updated operations key has been generated).

As shown in optional block 814, the method 800 may optionally include converting the operations key into an operations hash. As described above, in some embodiments, converting the operations key into an operations hash includes the primary portable aviation operations device being configured to use a hashing algorithm to convert the operations key into a fixed-length string of characters.

As shown in optional block 816, the method 800 may optionally include transmitting the operations hash to the secondary portable aviation operations device. As described above, in some embodiments, converting the operations key into an operations hash includes the primary portable aviation operations device being configured to use a hashing algorithm to convert the operations key into a fixed-length string of characters.

As shown in optional block 818, the method 800 may optionally include encrypting the cloud aviation operations data using the operations key. As described above, in some embodiments, encrypting the cloud aviation operations data using the operations key ensures that data transmitted via the first communication channel is not compromised by a malicious actor.

Operations and/or functions of the present disclosure have been described herein, such as in flowcharts. As will be appreciated, computer program instructions may be loaded onto a computer or other programmable apparatus (e.g., hardware) to produce a machine, such that the resulting computer or other programmable apparatus implements the operations and/or functions described in the flowchart blocks herein. These computer program instructions may also be stored in a computer-readable memory that may direct a computer, processor, or other programmable apparatus to operate and/or function in a particular manner, such that the instructions stored in the computer-readable memory produce an article of manufacture, the execution of which implements the operations and/or functions described in the flowchart blocks. The computer program instructions may also be loaded onto a computer, processor, or other programmable apparatus to cause a series of operations to be performed on the computer, processor, or other programmable apparatus to produce a computer-implemented process such that the instructions executed on the computer, processor, or other programmable apparatus provide operations for implementing the functions and/or operations specified in the flowchart blocks. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, can be implemented by special purpose hardware-based computer systems which perform the specified operations and/or functions, or combinations of special purpose hardware with computer instructions.

While this specification contains many specific embodiments and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

While operations and/or functions are illustrated in the drawings in a particular order, this should not be understood as requiring that such operations and/or functions be performed in the particular order shown or in sequential order, or that all illustrated operations be performed, to achieve desirable results. In certain circumstances, operations and/or functions in alternative ordering may be advantageous. In some cases, the actions recited in the claims may be performed in a different order and still achieve desirable results. Thus, while particular embodiments of the subject matter have been described, other embodiments are within the scope of the following claims.

While this specification contains many specific embodiment and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are illustrated in the drawings in a particular order, this should not be understood as requiring that such operations be performed in the particular order shown or in sequential order, or that all illustrated operations be performed, to achieve desirable results. In certain circumstances, operations in alternative ordering may be advantageous. In some cases, the actions recited in the claims may be performed in a different order and still achieve desirable results.

## Claims

1. A system comprising:
a secondary portable aviation operations device; and
a primary portable aviation operations device comprising memory and one or more processors communicatively coupled to the memory, the one or more processors configured to:
establish a first communication channel with the secondary portable aviation operations device and a second communication channel with an onboard aviation operations device;
secure the first communication channel with the secondary portable aviation operations device;
receive cloud aviation operations data from the secondary portable aviation operations device via the first communication channel;
receive onboard aviation operations data from the onboard aviation operations device via the second communication channel; and
perform one or more aviation related operations based at least in part on the cloud aviation operations data or the onboard aviation operations data.

2. The system of claim 1, wherein the secondary portable aviation operations device comprises second memory and one or more second processors communicatively coupled to the second memory, the one or more second processors configured to:
establish a third communication channel with a cloud aviation operations device; and
receive the cloud aviation operations data from the cloud aviation operations device via the third communication channel.

3. The system of claim 2, wherein the third communication channel is unsecured.

4. The system of claim 2, wherein the one or more processors are further configured to:
terminate the second communication channel with the onboard aviation operations device; and
establish a fourth communication channel with the cloud aviation operations device.

5. The system of claim 4, wherein the one or more second processors are further configured to:
terminate the third communication channel with the cloud aviation operations device; and
establish a fifth communication channel with the onboard aviation operations device.

6. The system of claim 2, wherein the one or more second processors are further configured to:
generate cached cloud aviation operations data by storing the cloud aviation operations data in a local cache;
determine that the third communication channel is malfunctioning; and
in response to the determination that the third communication channel is malfunctioning, transmit the cached cloud aviation operations data to the primary portable aviation operations device.

7. The system of claim 1, wherein the onboard aviation operations device is physically secured to an aircraft.

8. The system of claim 1, wherein the onboard aviation operations device is a flight management system.

9. The system of claim 1, wherein the primary portable aviation operations device is a first electronic flight bag and the secondary portable aviation operations device is a second electronic flight bag.

10. The system of claim 1, wherein securing the first communication channel with the secondary portable aviation operations device comprises the one or more processors being further configured to:
generate an operations key;
generate a primary public key and a primary private key;
transmit the primary public key to the secondary portable aviation operations device;
encrypt the operations key using a secondary public key; and
transmit the operations key to the secondary portable aviation operations device.

11. The system of claim 10, wherein the one or more processors are further configured to:
convert the operations key into an operations hash; and
transmit the operations hash to the secondary portable aviation operations
device.

12. The system of claim 10, wherein the secondary portable aviation operations device comprises second memory and one or more second processors communicatively coupled to the second memory, the one or more second processors configured to:
encrypt the cloud aviation operations data using the operations key.

13. The system of claim 2, wherein the first communication channel, the second communication channel, and the third communication channel are simultaneously active.

14. A method comprising:
establishing a first communication channel with a secondary portable aviation operations device and a second communication channel with an onboard aviation operations device;
securing the first communication channel with the secondary portable aviation operations device;
receiving cloud aviation operations data from the secondary portable aviation operations device via the first communication channel;
receiving onboard aviation operations data from the onboard aviation operations device via the second communication channel; and
performing one or more aviation related operations based at least in part on the cloud aviation operations data or the onboard aviation operations data.

15. A computer program product comprising at least one non-transitory computer-readable storage medium having computer program code stored thereon that, in execution with at least one processor, configures the computer program product for:
establishing a first communication channel with a secondary portable aviation operations device and a second communication channel with an onboard aviation operations device;
securing the first communication channel with the secondary portable aviation operations device;
receiving cloud aviation operations data from the secondary portable aviation operations device via the first communication channel;
receiving onboard aviation operations data from the onboard aviation operations device via the second communication channel; and
performing one or more aviation related operations based at least in part on the cloud aviation operations data or the onboard aviation operations data.
